Europäisches Patentamt

European Patent Office

Office européen des brevets

(19)

(11) Publication number: **0 116 734**
A1

(12) **EUROPEAN PATENT APPLICATION**

(21) Application number: 83300731.3

(22) Date of filing: 15.02.83

(51) Int. Cl.³: **F 16 K 31/04**

(43) Date of publication of application:
29.08.84 Bulletin 84/35

(84) Designated Contracting States:
BE CH DE FR GB IT LI LU NL

(71) Applicant: Fujikin International, Inc.
3-4, 2-chome Itachibori
Nishi-ku Osaka(JP)

(72) Inventor: Torii, Mamoru
43-1, Yodonohara-cho
Takatsuki-shi Osaka(JP)

(74) Representative: Drever, Ronald Fergus et al,
Swindell & Pearson 44, Friar Gate
Derby DE1 1DA(GB)

(54) Valve control device.

(57) A valve control device (2) is connectible to a valve (1) for opening and closing of the valve. The device (2) comprises a fixed casing (16) axially mounting a valve control rod (22) which is connectible to the stem (13) of the valve (1). A slider (26) is mounted on the valve control rod (22) and is movable relative to the latter by a specified distance. A driven gear (35) is mounted on the casing (16) on a shaft substantially at right angles to the valve control rod. Power is transmitted from an electric motor (59) to the driven gear (35), and two toggle joint assemblies (63, 64) interconnect the casing (16), the slider (26) and the driven gear (35). A spring (32) between the valve control rod (22) and the slider (26) biasses the valve control rod (22) in a direction to close the valve (1).

EP 0 116 734 A1

./...

FIG. 1

FIG. 2

VALVE CONTROL DEVICE

The present invention relates to a valve control device adapted to be connected to a valve for opening and closing the valve.

Such valve control devices heretofore known include those of the fluid type having a diaphragm for moving the valve stem to open and close the valve, those of the electromagnetic type having a solenoid for opening and closing the valve, and those having an electric motor for moving a valve control rod connected to the valve element to open and close the valve. The valve control device including a solenoid or diaphragm is merely so constructed that the iron core of the solenoid or diaphragm stops at either one of two limit positions, with the result that the valve is controllable to only two positions, i.e., the opened and closed positions. The valve control device incorporating an electric motor is adapted to stop the valve control rod at a desired position not only to open or close the valve but also to control the degree of opening of the valve continuously or steplessly. With conventional devices of this type, however, the valve control rod is coupled directly to the motor by gears or the like and therefore presses the valve element (disk) to the valve seat with an excessive force when closing the valve. This is likely to cause damage to the valve seat or the valve element.

An object of the present invention is to provide a valve control device which is adapted to open and close a valve and also to control the degree of opening of the valve steplessly and which is capable of pressing the valve element (disk) to the valve seat always with a suitable force when closing the valve.

The valve control device of the present invention comprises a fixed casing, a valve control rod axially movably mounted on the casing and connectable to a valve element, a slider mounted on the valve control rod and movable relative to the rod axially thereof by a specified distance, a rotary member mounted on the casing and rotatable about a shaft approximately at right angles to the valve control rod, an electric motor fixed to the casing, power transmission means for delivering the rotation of the electric motor to the rotary member, two toggle joint assemblies each comprising three links interconnecting the casing, the slider and the rotary member, and a spring provided between the valve control rod and the slider and biasing the valve control rod in a direction to close a valve.

With the valve control device of the present invention, the rotation of the electric motor is delivered through the power transmission means, the rotary member and the toggle joint assemblies to the slider, which in turn transmits its movement through the spring to the valve control rod and to the valve element connected thereto, so that the valve control rod can be brought to a desired stopped position by the motor. Thus not only the valve can be opened and closed, but the degree of opening thereof is adjustable steplessly. Furthermore the arrangement wherein the rotation of the rotary member is delivered to the slider through the toggle joint assemblies enables an electric motor of relatively small output to give a great valve control force. When closing the valve, the slider does not push the control rod directly to press the valve element against the valve seat but pushes the valve control rod via the spring, causing the force of the spring to press the valve element against the valve seat, with the result that the valve element can be pressed against the valve seat always with a specified suitable force afforded by the spring. This eliminates the likelihood that the valve element will be pressed against the valve seat with an excessive force that would cause damage to the valve seat or the valve element.

Preferably springs are connected between the casing and specified links of each toggle joint assembly for biasing the slider in a given direction, whereby the slider can be prevented from backlashing to position the slider accurately in corresponding relation to the angle of rotation of the rotary member, assuring accuracy in opening or closing the valve or in adjusting the degree of valve opening.

Further preferably the power transmission means includes a drive gear fixed to a shaft adapted to be driven by the electric motor, and the rotary member is a driven gear meshing with the drive gear. A backlash eliminating gear is mounted on the same shaft as the driven gear on one side thereof so as to rotate relative to the driven gear through a predetermined angle. A spring is provided between the backlash eliminating gear and the driven gear for biasing the former gear in a specified direction with respect to the driven gear.

This arrangement eliminates the backlash of the driven gear relative to the drive gear, permitting the driven gear, namely, the rotary member, to rotate through an angle accurately corresponding to the angle of rotation of the electric motor and thereby assuring accuracy in opening or closing of the valve or in adjusting the degree of valve opening.

Further preferably the electric motor is an electric pulse motor which is rotatable through a definite angle at a time by pulse signals, such that the degree of opening of the valve is detectable in terms of the number of pulses without using some other sensor. Moreover because the shaft of the pulse motor can be held in a desired position easily, the valve is controllable easily for opening or closing or for the adjustment of the degree of its opening.

Other features of the invention will become more apparent from the following description.

Fig. 1 is a front view partly broken away and showing a valve control device according to the invention and a valve having the device connected thereto, with a cover and an electric pulse motor of the device removed;

Fig. 2 is a view in section taken along the line II-II in Fig. 1 and partly broken away;

Fig. 3 is an enlarged front view showing a driven gear serving as a rotary member shown in Figs. 1 and 2 and also related parts;

Fig. 4 is a view in section taken along the line IV-IV in Fig. 3; and

Fig. 5 is an enlarged view in section taken along the line V-V in Fig. 3.

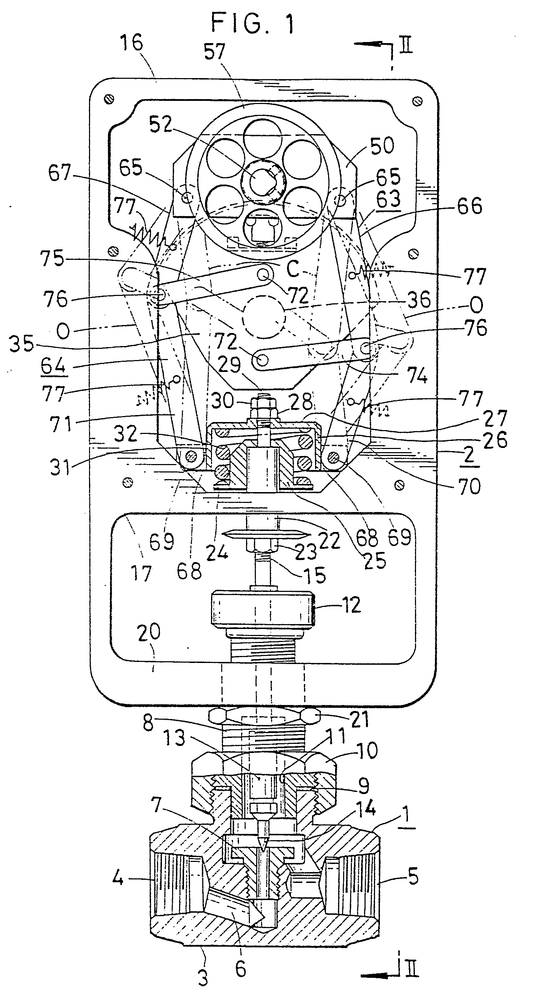

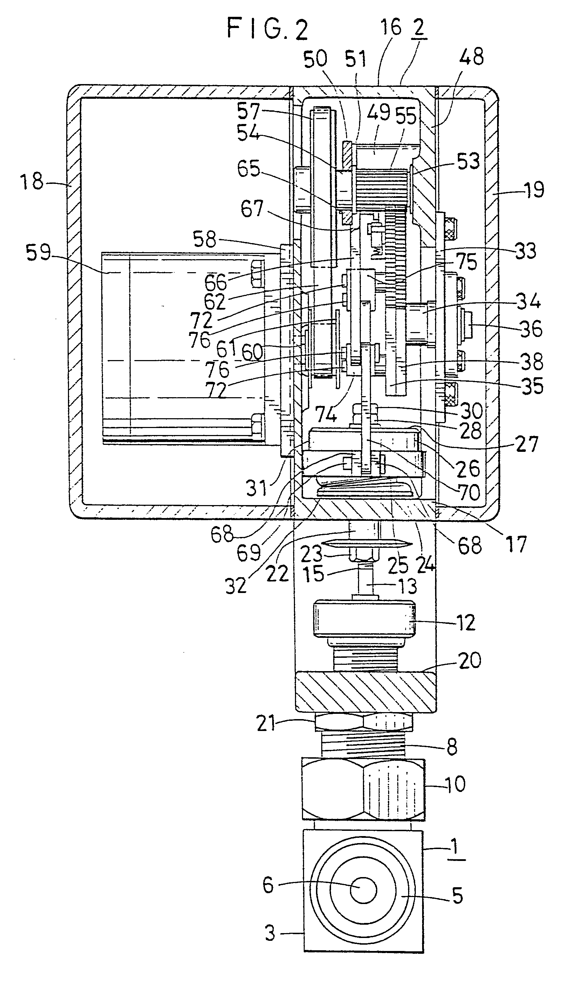

Fig. 1 and Fig. 2 show a valve 1 and a valve control device 2 connected thereto. Although the valve 1 and the control device 2 can be arranged as desired, the valve 1 is disposed below the device 2 as illustrated in Figs. 1 and 2 for the following description. The lefthand side of Fig. 2 will be referred to as "front," and the right-hand side thereof as "rear."

The valve 1, which itself is already known, has the following construction. A valve case 3 is formed in its opposite sides with an inlet 4 and an outlet 5 for a fluid. A fluid channel 6 extends through the valve case 3 from the inlet 4 to the outlet 5. A vertical valve seat 7 is installed in an intermediate portion of the fluid channel 6. By a nut 10, a vertical closure 8 is fixed to the top of the valve case 3 with a gasket 9 interposed therebetween. A stepped bore 11 extends vertically through the closure 8 centrally thereof. A packing (not shown) is held in an upper interior portion of the closure 8 by a packing gland 12 screwed on the upper end of the closure 8. A vertical valve stem 13 is vertically slidably inserted in the bore 11 of the closure 8 in fluid-tight contact with the packing. A valve element 14 opposed to the valve seat 7 from above is screwed in the lower end of the valve stem 13. The valve stem 13 is externally threaded as at 15 at its upper end projecting upward beyond the closure 8.

The valve control device 2 has a casing 16 in the form of a box having open front and rear sides. The interior of the casing 16 is divided into upper and lower portions by a horizontal intermediate wall 17. A front cover 18 and a rear cover 19 are attached respectively to the front and rear sides of the upper portion of the casing 16. The upper portion of the valve closure 8 vertically extends through a horizontal lower wall 20 of the casing 16 in screw-thread engagement therewith and is fixed thereto by a nut 21.

A valve control rod 22 vertically extends through, and is vertically movably supported by, the casing intermediate wall 17. The externally threaded upper end 15 of the valve stem 13 is screwed in the lower end of the valve control rod 22 and secured thereto by a nut 23. The valve control rod 22 is stepped and therefore has an upper portion which is slenderer than the remaining lower portion. A spring retainer 25 having at its lower end a flange 24 integral therewith is fitted to the stepped portion of the rod 22 and thereby restrained from moving further downward. A hollow slider 26 open at its bottom has an upper wall 27 which is vertically slidably fitted to a portion of the control rod 22 which portion is positioned above the spring retainer 25. An adjusting nut 28 is screwed on an externally threaded portion 29 formed at the upper end of the control rod 22 and is locked in a suitable position by a nut 30, rendering the slider 26 movable relative to the control rod 22 by the specified distance between the spring retainer 25 and the adjusting nut 28. Fitted around the spring retainer 25 inside the peripheral wall 31 of the slider 26 is a vertical compression coiled spring 32 bearing at its upper and lower ends against the upper wall 27 of the slider 26 and the flange 24 of the spring retainer 25. The valve control rod 22 is biased by the spring 32 downward away from the slider 26.

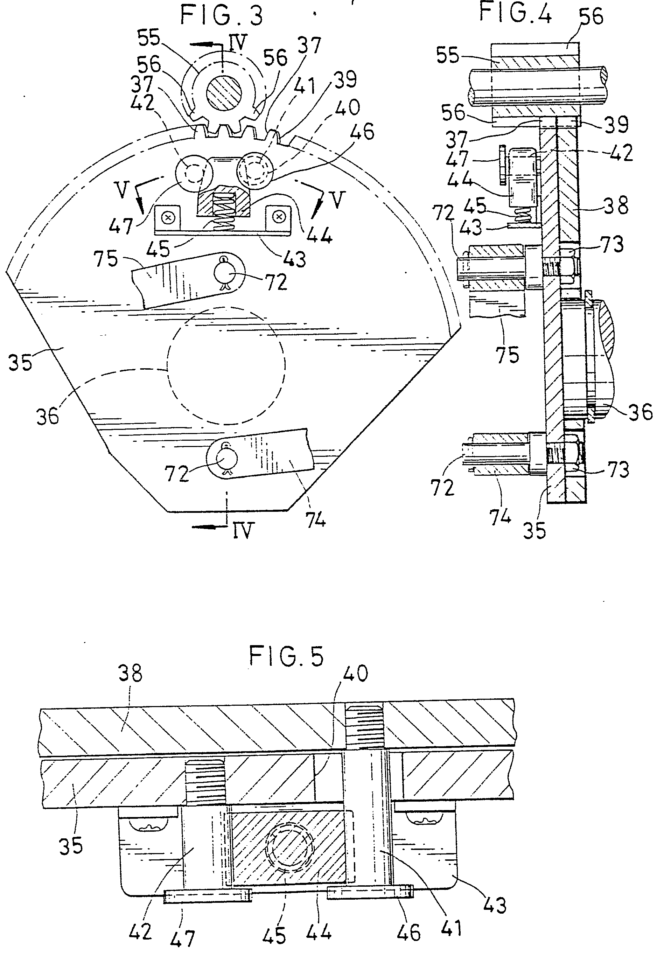

A vertical rotary member support plate 33 is fixed to the rear side of the upper portion of the casing 16. A horizontal shaft 36 extending forward and integral with a driven gear 35 at its front end is rotatably supported by a bearing 34 fixed to the plate 33. The driven gear 35 is shown in greater detail in Figs. 3 to 5. The driven gear 35 has teeth 37 along an upper outer peripheral portion thereof subtending an angle of about $150^{\circ}$ at its center. The other outer peripheral portion of the gear 35 is suitably cut away to avoid interference with other parts. A backlash eliminating gear 38 identical with the driven gear 35 in shape and dimensions is mounted on the shaft 36 in contact with the gear 35 and is rotatable independently of the gear 35. The gear 38 is formed with the same teeth 39 as the driven gear 35 in the same position. A circular hole 40 is formed in the driven gear 35. A horizontal pin 41 extending through the hole 40 and projecting forward is screwed in the backlash eliminating gear 38. The pin 41 extending through the gear 35 serves to limit the amount of rotation of the gear 38 relative to the gear 35. The pin 41 is slightly smaller than the hole 40 in diameter, so that the gear 38 is rotatable by a predetermined angle relative to the gear 35 from the position in which the teeth 39 of the gear 38 are generally in register with the teeth 37 of the driven gear 35 to a position in which the teeth 39 are slightly displaced from the teeth 37 of the gear 35 in a clockwise direction when seen from the front as illustrated in Figs. 1 and 3. A horizontal pin 42 is screwed in the driven gear 35 at a position some distance away from the hole 40 counterclockwise when seen from the front, the pin 42 projecting forward. A spring retainer 43 positioned below the pins is fixed to the front side of the driven gear 35. An upwardly tapered wedge 44 is inserted from below in the space between the pins 41, 42 on the gears 38, 35. A compression coiled spring 45 is provided between the wedge 44 and the spring retainer 43 for biasing the wedge upward. The pressing contact of the wedge 44 with the two pins 41 and 42 biases the backlash eliminating gear 38 clockwise as seen from the front into rotation relative to the driven gear 35. The two pins 41 and 42 are integrally formed with flanges 46 and 47 respectively at their front ends for preventing the wedge 44 from falling off.

At a location close to the upper end of the casing 16, the rear wall 48 of the casing is integrally formed with a pair of link support portions 49 projecting forward therefrom. A vertical link support plate 50 is attached to the front ends of these portions with a shim 51 interposed therebetween. A forwardly extending horizontal shaft 52 is rotatably supported on bearings 53, 54 fixed to the casing rear wall 48 and the link support plate 50. A drive gear 55 meshing with the driven gear 35 is fixed to the portion of the shaft 52 between the two bearings 53 and 54. Where the drive gear 55 meshes with the backlash eliminating gear 38, the tooth 56 of the drive gear 55 is pressed against the tooth 37 of the driven gear 35 by the tooth 39 of the gear 38 at all times. This eliminates the backlash between the drive gear 55 and the driven gear 35. A driven pulley 57 having a relatively large diameter is fixed to the front end of the horizontal shaft 52.

A vertical motor support plate 58 is fixed to the front side of the upper portion of the casing 16. An electric pulse motor 59 is fixed to the front side of the plate 58 as oriented rearward horizontally. The motor has a shaft 60 extending through the plate 58 horizontally rearward and fixedly carrying at its rear end a drive pulley 61 having a relatively small diameter. A timing belt 62 is reeved around this pulley 61 and the driven pulley 57.

The casing 16, the slider 26 and the driven gear 35 are interconnected by two toggle joint assemblies 63 and 64 in the following manner. Screwed in a lower front end portion of each link support 49 of the casing 16 is a horizontal pin 65 extending forward and supported at its front end by the link support plate 50. Links 66 and 67 are rotatably supported each at its one end by these pins 65. A pair of vertical front and rear brackets 68 arranged in parallel are formed on the outer surface of the peripheral wall 31 of the slider 26 integral therewith at each of two locations symmetric with each other. A forwardly extending horizontal pin 69 is supported by each pair of vertical brackets 68. Links 70 and 71 are rotatably supported each at its one end by the pins 69. Forwardly extending horizontal pins 72 are secured to the driven gear 35 by nuts 73 at two locations symmetric with each other. Links 74 and 75 are rotatably supported each at its one end by these pins 72. The other ends of the three links 66, 70 and 74 are rotatably connected together by a forwardly extending horizontal pin 76 at one location to provide one of the toggle joint assemblies, 63. Similarly the other ends of the other three links 67, 71 and 75 are connected together by a horizontal pin 76 at one location to constitute the other toggle joint assembly 64. Tension coiled springs 77 are connected between the casing 16 and the four links 66, 67 and 70, 71 connected to the casing 16 and the slider 26 for biasing these links 66, 67, 70 and 71 rotatingly outward to move the slider upward. These springs 77 serve to eliminate the backlash of the slider 26.

The rotation of the shaft 60 of the motor 59 is transmitted to the driven gear 35 on speed reduction via the drive pulley 61, belt 62, driven pulley 57, shaft 52 and drive gear 55. The rotation is further transmitted through the toggle joint assemblies 63 and 64 to the slider 26, which in turn transmits its movement through the spring 32 to the valve control rod 22, the valve stem 13 and the valve element 14. By controlling the rotation of the motor 59 with pulse signals, the valve 1 is opened and closed, and the degree of opening of the valve is adjusted steplessly in the following manner.

When the valve 1 is in its fully open state, the upper and lower links 66, 67 and 70, 71 connected to the casing 16 and the slider 26 are held in an outwardly flexed position as indicated in broken lines O in Fig. 1, with angles of about 120° formed between the upper and lower links 66, 67 and 70, 71. At this time, the slider 26 is in its upper limit position, and the adjusting nut 28 on the control rod 22 is in pressing contact with the slider 26 under the action of the spring 32. The valve element 14 is positioned above the valve seat 7 the largest distance away therefrom to leave the valve 1 fully opened.

To close the valve 1, the driven gear 35 is rotated by the motor 59 clockwise as seen from the front. With the rotation of the driven gear 35 in this direction, the upper and lower links 66, 67 and 70, 71 gradually rotate inward to progressively increase the angles therebetween, with the result that the slider 26 and the control rod 22 gradually descend together. When the upper and lower links 66, 67 and 70, 71 rotate slightly inward from the position indicated in solid lines in Fig. 1, with angles of about 160° formed therebetween, the valve element 14 comes into contact with the valve seat 7 and stops, but the upper and lower links 66, 67 and 70, 71 further rotate to a position where they are slightly flexed inward from the position in which they are in alignment.

The driven gear 35, i.e., the motor 59, stops when the angles between the links have increased to about 190° as indicated in broken lines C in Fig. 1. When the upper and lower links 66, 67 and 70, 71 rotate inward after the valve element 14 has come into contact with the valve seat 7, the slider 26 only descends away from the adjusting nut 28 of the control rod 22. Upon the links 66, 67 and 70, 71 stopping at the valve closing position indicated in the broken lines C, the valve element 14 is pressed against the valve seat 7 with a predetermined force afforded by the spring 32 to close the valve 1. This eliminates the likelihood that the valve element 14 will be pressed against the valve seat 7 with an excessive force that would cause damage to the valve element 14 or the valve seat 7. When the upper and the lower links 66, 67 and 70, 71 stop at the slightly inwardly flexed position, a clamping force acts on the toggle joint assemblies 63, 64, with the result that the valve can be held in its closed state even if the motor is de-energized in this position. Because the rotation of the motor 59 is delivered to the drive gear 55 upon speed reduction and also because the rotation of the drive gear 55 is transmitted to the slider 26 via the toggle joint assemblies 63 and 64, a motor of relatively small output is usable for giving a great valve operating force.

The valve 1 can be opened fully by a reverse procedure to the above, i.e., by rotating the driven gear 35 counterclockwise as seen from the front until the upper and lower links 66, 67 and 70, 71 reach the full-open position shown in the broken lines O in Fig. 1.

The position of the valve element 14 in the vertical direction, i.e., the degree of opening of the valve 1, is adjustable steplessly by controlling the angle of rotation of the motor 59 so that the upper and lower links 66, 67 and 70, 71 will stop at a desired position between the valve full-open position indicated in the broken lines O and having angles of about $120^{\circ}$ and the position at angles of about $160^{\circ}$ in which the valve element 14 comes into contactwith the valve seat 7 to close the valve 1 (see Fig. 1). With the use of the electric pulse motor 59 which is rotatable through a specified angle at a time with pulse signals, the degree of opening of the valve 1 is detectable in terms of the number of pulses without using some other sensor, while the motor shaft 60 can be held in a desired position easily. This facilitates opening and closing of the valve 1 and stepless adjustment of the valve opening. However, the electric motor for driving the rotary member is not limited to such an electric pulse motor; a usual d.c. electric motor may be used. Furthermore, the backlash eliminating gear 38 eliminates the backlash between the drive gear 55 and the driven gear 35, while the springs 77 provided between the casing 16 and the links 66, 67, 70, 71 preclude the backlash of the slider 26. This arrangement assures accurate corresponding relation between the angle of rotation of the motor 59 and the angle of rotation of the driven gear 35, as well as between the angle of rotation of the driven gear 35 and the position of the slider 26, consequently assuring accuracy in opening and closing the valve 1 and also in steplessly adjusting the degree of opening of the valve. However, the means for transmitting the rotation of the electric motor to the rotary member are not limited to those of the foregoing embodiment. The rotary member is not always limited to a gear but can be a separate member which is attached to the gear. The construction of the valve 1, as well as of other components, is not limited to the foregoing but can be modified suitably.

What is claimed is:

1.   A valve control device connectible to a valve for opening and closing the valve and comprising a fixed casing, a valve control rod connectible to the valve element of the valve, and an electric motor, characterised in that the valve control rod (22) is axially mounted on the casing (16), a slider (26) is mounted on the valve control rod (22) and is movable relative to the rod (22) axially thereof by a specified distance, a rotary member (35) is mounted on the casing (16) and is rotatable about a shaft (36) substantially at right angles to the valve control rod (22), power transmission means (61, 62, 57, 52, 55) for delivering the rotation of the electric motor (59), which is fixed to the casing (16), to the rotary member (35), two toggle joint assemblies (63, 64) each comprising three links (66, 70, 74 and 67, 71, 75 respectively) interconnecting the casing (16), the slider (26) and the rotary member (35), and biassing means (32) provided between the valve control rod (22) and the slider (26) and biassing the valve control rod (22) in a direction to close the valve (1).

2.   A valve control device according to claim 1, characterised in that springs (77) are connected between the casing (16) and specified links of each toggle joint assembly (63, 64) for biassing the slider (26) in a definite direction.

3.   A valve control device according to claim 1 or 2, characterised in that the power transmission means includes a drive gear (55) fixed to a shaft (52) adapted to be driven by the electric motor (59), and the rotary member is a driven gear (35) meshing with the drive gear (55), a backlash eliminating gear (38) being mounted on the same shaft (36) as the driven gear (35) on one side thereof and rotatable relative to the driven gear (35) through a predetermined angle, biassing means (45) being provided between the backlash eliminating gear (38) and the driven gear (35) for biassing the backlash eliminating gear (38) in a specified direction with respect to the driven gear (35).

4. A valve control device according to any of claims 1 to 3, characterised in that the electric motor (59) is an electric pulse motor.

FIG. 1

0116734

1/3

# FIG. 2

0116734

**FIG.3**

**FIG.4**

**FIG.5**

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| A | US-A-1 713 402 (SHIVERS) <br> * Figures 1, 2 * | 1 | F 16 K 31/04 |
| A | US-A-1 159 175 (CAMPBELL) <br> * Figure 1 * | 1 | |
| A | US-A-4 072 064 (LLOYD et al.) <br> * Figure 1 * | 3 | |
| A | US-A-1 750 679 (MITCHELL) <br> * Figure 1 * | 3 | |

TECHNICAL FIELDS SEARCHED (Int. Cl ³)

F 16 K 31/00
F 16 H 55/00

The present search report has been drawn up for all claims

| Place of search | Date of completion of the search | Examiner |
|---|---|---|
| BERLIN | 22-09-1983 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82